# EUROPEAN PATENT SPECIFICATION

(11) **EP 2 220 000 B1**
(45) Date of publication and mention of the grant of the patent: **18.07.2012**
(21) Application number: 08736077.2
(22) Date of filing: 10.04.2008
(51) Int. Cl.: C01G 31/02, H01M 6/40, H01M 4/58

(54) **IRON-DOPED VANADIUM(V) OXIDES**
EISENDOTIERTE VANADIUM(V)-OXIDE
OXYDES DE VANADIUM (V) DOPÉS AU FER

(30) Priority: 12.12.2007 US 12942
(43) Date of publication of application: 25.08.2010
(73) Proprietor: Centre National de la Recherche Scientifique (CNRS), 75016 Paris (FR)
(72) Inventor: PECQUENARD, Brigitte, F-33400 Talence (FR); LEVASSEUR, Alain, F-33170 Gradignan (FR); GIES, Astrid, F-33170 Gradignan (FR)
(74) Representative: Blot, Philippe Robert Emile
(86) International application number: PCT/EP2008/054357
(87) International publication number: WO 2009/074353

(56) References cited:
- WO-A-93/12550
- SAIDI M Y ET AL: "Investigation of the electrochemical properties of FexV2O5" SOLID STATE IONICS, NORTH HOLLAND PUB. COMPANY. AMSTERDAM, NL, vol. 82, no. 3, 1 December 1995 (1995-12-01), pages 203-207, XP004050222 ISSN: 0167-2738
- J.J. BARA ET AL.: "The temeprature induced transition in the teta-type vanadium oxide bronzes" PHYS. STAT. SOL., vol. 118, 1990, pages 41-51, XP002491449
- S.C. NAM ET AL: "The effects of Cu-doping in V2O5 thin film cathode for microbattery" KOREAN JOURNAL OF CHEMICAL ENGINEERING, vol. 18, no. 5, 2001, pages 673-678, XP002491450
- LEE J M ET AL: "Effect of silver co-sputtering on amorphous V2O5 thin-films for microbatteries" 10 September 2004 (2004-09-10), JOURNAL OF POWER SOURCES, ELSEVIER, AMSTERDAM, NL, PAGE(S) 122 - 131 , XP004544522 ISSN: 0378-7753 "Experimental", "results"
- CHOI J-H ET AL: "CuxFeyV2O5 xerogel cathodes for lithium secondary batteries" ELECTROCHIMICA ACTA, ELSEVIER SCIENCE PUBLISHERS, BARKING, GB, vol. 50, no. 2-3, 30 November 2004 (2004-11-30), pages 403-407, XP004628850 ISSN: 0013-4686

## Description

The invention relates to process of preparation of a substrate coated with a thin layer of an iron-doped vanadium oxide having a strong capacity and potentially usable in all-solid-state lithium microbatteries. The invention also relates to the preparation process of said substrates and microbafteries

Since many years, the miniaturization of electronic systems is very spectacular. Their power consumptions have considerably decreased for many applications. More and more of apparatuses become portable or wandering. Batteries and accumulators follow the same evolution: they evolved from the R20 to the R6 format, and then appeared the button batteries, whose size regularly decreased as well. Since 15 to 20 years, many researchers worked on an even larger miniaturization and gave rise to the microbatteries.

A microbattery is defined as a two-dimensional system comprising a positive electrode, an electrolyte (insulating layer) and a negative electrode. Such system generally has a thickness of some micrometers (µm) and a surface ranging from a few mm² to several cm², able to deliver weak currents, typically a few microamperes (µA). Microbatteries are prepared primarily by sputtering and by thermal evaporation on a generally flexible, very thin and perfectly tight support.

The material of the positive electrode is first of all deposited by sputtering; its thickness generally varies from 2 to 5 µm. Then, the electrolyte is deposited by using the same technique with a thickness from 1 to 2 µm. Lastly, the material of the negative electrode, which is very generally pure lithium, is thermally evaporated. Finally, a last protective layer needs to be applied. The complete microbattery has a total thickness of approximately 10 µm to 15 µm (without taking into account the encapsulation).

In order to be able to feed micro-electronics circuits for long periods, it is necessary to increase the density of energy of the microbatteries and consequently their capacity. Many studies are therefore currently carried out on thin layer positive electrode materials. Vanadium(V) oxide (V₂O₅), and more generally oxides of transition metals having a lamellar structure, arouse intensive research works, since they are more promising than the sulphides because of their greater chemical stability, higher potentials as compared to the Li/Li+ redox cell and larger discharge capacities.

V₂O₅ is besides a material of choice as positive electrode in lithium microbatteries, now existing at the pre-development stage. This material makes it possible to obtain the strongest values of capacity which can reach 120 µAhcm⁻²µm⁻¹, However, it presents the disadvantage of having a bad behaviour in cycling when crystallized; this phenomenon being all the more marked when the window of potential is broad (between about 3.7 and about 1.5 V).

S. Maingot et al. (Journal of Power Sources, 54, (1995), 342-345) studied the origin of the improved cycling capability of sol-gel prepared Fe₀.₁₂V₂O_{5.16} compared with V₂Q₅; however this iron-doped vanadium oxide is prepared from a V₂O₅ xerogel, requiring a further step of ionic exchange, and then thermal treatment, leading to a quite complex overall process, which is difficult to transpose to an industrial scale. Moreover, Fe_{0.12}V₂O_{5.16} is consequently obtained in a massive form or at least as thick layers (several hundreds of µm), however not easily in the form of thin layers and is therefore not appropriate for positive electrodes useable in microbatteries.

An iron doped vanadium oxide doped of the formula FeₓV₂O₅ with x being respectively 0.12, 0.11 and in the range of 0,33 and 0,35 has been disclosed in the article of M.Y. Saidi et al., (Solid State lonics, North Holland Pub. Company, Amsterdam, NL, vol. 82, no.3, 1 December 1995, pages 203-207), the application WI 93/12550 and the article of J.J.Bara et al (Phys./ Stat. Sol. Vol.118, 1990, pages 41-45).

There is therefore still a need for thin layers positive electrodes for use in microbatteries presenting an Improved behaviour in cycling.

As such, a first objective of the present invention is to provide a specific material, useable in the form of thin layers appropriate to microbatteries which presents an improved behaviour in cycling as compared to vanadium oxide.

The present inventors have now discovered that the above objectives are met, in whole or in part, with the present invention. Other objectives will appear in the following description of the invention.

Particularly useful in the present invention is an iron-doped vanadium(V) oxide of formula Fe_{y}V₂O₅, wherein the FeN molar ratio varies from 0.015 to 0.4, preferably from 0.02 to 0.2, more preferably from 0.02 to 0.1. This molar ratio is determined by RBS (Rutherford Backscattering Spectroscopy), fixing the vanadium amount to a value of 2, and deducing the iron quantity. This corresponds to a positive real number "y" value of 0.03 to 0.8, preferably 0.04 to 0.4, more preferably from 0.04 to 0.2

Preferably, the iron-doped vanadium(V) oxide of formula FeyV₂O₅ is in the form of a thin layer having a thickness in the range of about 50 nm to about 1000 nm, advantageously in the range of about 200 nm to about 800 nm, typically a thickness of about 500 nm. The thickness of the layer is typically measured with a mechanical profilometer.

An aspect of the present invention is the process for the preparation of an iron-doped vanadium oxide of formula FeyV₂O₅, as defined above. The invention process uses the cathode co-pulverisation method, also referred to as cathode sputtering.

The cathode pulverisation method involving one sole target is known in the art (see for example A. Gies et al., Solid Sate lonics, 176, (2005), 1627-1634).

The principle of this method consists in ejecting matter starting from a material (the target) thanks to a flow of energy particles (Ar+) coming from a discharge gas, in a chamber under partial vacuum. The target is fixed on an electrode (cathode) bearing a negative tension. One second electrode (anode) is facing the cathode with a few centimetres between them.

By applying a potential difference between the two electrodes, one causes the ionization of the discharge gas, thus creating a plasma containing electrons and positive ions attracted by the target. When they possess sufficient energy, they eject atoms which settle onto the substrates facing the target, thus forming a thin layer.

According to the present invention, this known method has been improved and comprises the step of carrying out a simultaneous pulverisation starting from two different targets in one pulverisation chamber.

More precisely, the process for the preparation of a substrate coated with a thin layer of iron-doped vanadium oxide of formula Fe_{y}V₂O₅ comprises the steps of:
a) providing a first Vanadium-containing-target (the V-target) and a second Iron-containing target (the Fe-target) and fixing each of said first and second targets on a target-support;
b) positioning said first and second targets in a pulverisation chamber, advantageously on a target-holder, the cathode;
c) placing a substrate in the pulverisation chamber facing said two targets;
d) filling the pulverisation chamber with a gas mixture comprising from 0 to 60-70 % of oxygen, and from 30-40 to 100 % of argon, until a pressure of 0.5 Pa to 2 Pa, advantageously 1 Pa is obtained in the pulverisation chamber;
e) applying an electrical power Pᵥ between the V-target and the substrate and an electrical power P_{Fe} between the Fe-target and the substrate; and allowing deposition to occur;
f) removing the applied tension, opening the pulverisation chamber and recovering the substrate having a thin layer of Fe_{y}V₂O₅ on one of its surface.

The target may be a metal or one of its oxides, or mixtures of more than one oxides, or a metal mixed with one or more of its oxides. In the above process, the targets may be on the one side V and/or V₂O₅, and on the other side Fe and/or Fe₂O₃. When oxides are used, both V₂O₅ and Fe₂O₃ targets are each prepared from high purity V₂O₅ and Fe₂O₃ powders, respectively. Each of the powders are advantageously mixed with an organic binder, such as camphor for example, at a ratio of about 0.5 weight% and about 3 weight%, preferably about 2 weight% relatively to the powder.

Organic binders that are in a solid form may advantageously be dissolved before use into any appropriate solvent. As illustrative example, camphor, which is solid under ambient conditions, is dissolved in acetone before use.

This mixture is then squeezed under an air pressure of approximately 30.10³ kg during 5 min. The target is then sintered, generally at 400°C during 12 h then at 600°C during 10h, so as to obtain a dense target with good mechanical resistance. This heat treatment is also helpful for the removal of the organic binder, where appropriate.

For the invention purpose, the V-target is preferably a pure vanadium target or a V₂O₅ target, and the Fe-target is a pure iron target or a Fe₂O₃ target. Still more preferably, the V-target is a V₂O₅ target, and the Fe-target is a Fe₂O₃ target.

Oxygen and argon are preferably used as highly pure gases, for example a purity of about 99.5% for oxygen, and a purity of about 99.995% for argon. Pressure ratio of the gas mixture may vary depending on the nature of each of the targets, and good results are obtained with an oxygen ratio of about 10% to 20%, best results are obtained with an oxygen ratio of about 14%. Other gas mixtures are possible, without departing from the scope of the present invention.

Fixing the targets onto their target supports may be realised by any known method known In the art, and for example, using a silicone-containing adhesive.

Both targets fixed on their respective supports are positioned in the pulverisation chamber In a convergent manner, i.e. each converging towards the substrate where deposition will occur.

The substrate is advantageously placed on a mobile plate, in order to make it possible to vary the distance between the substrate and the targets. According to a preferred embodiment of the process of the invention, the substrate is positioned at an equal distance of the V-target and the Fe-target.

The substrate is advantageously a conductive substrate and should not lead to undesired reactions with the liquid electrolyte in the range of applied electrical potentials. Because of its appropriate electrical conductivity, especially for electrochemical studies, stainless steel is preferably used, although it does not constitute a limit to the present invention, but is rather cited as an example of usable substrates.

According to a further embodiment, the pulverisation chamber is first emptied before it is filled with the gas mixture. Emptying the pulverisation chamber is conventionally carried out with a turbomolecular pump until a maximum is obtained, i.e. typically a vacuum of about 1.0.10⁻⁵ Pa to about 1.10⁻⁵ Pa, for example of about 5.10⁻⁵ Pa.

Generally the ratio P_{Fe} / Pᵥ ranges from 0.1 to 0.5, preferably from 0.2 to 0.4, and, for example, the applied power at the V-target (Pᵥ) is set to a value ranging from 30 W to 70 W, typically the value is set to about 50 W, and the applied power at the Fe-target (P_{Fe}) is set to a value ranging from 5 W to 25 W, preferably from 10 W to 20 W.

For example, fixing the applied tension to 50 W for the V-target and varying that applied to the Fe-target between 12 W and 20 W, It is possible to obtain compounds of the Fe_{y}V₂O₅ type whose Fe/V ratio determined by RBS varies from 0.015 to 0.40. The cathode co-pulverization technique thus makes it possible to prepare thin layers (generally in the range of 50 nm to 1000 nm, advantageously in the range of 200 nm to 800 nm, typically of about 500 nm) of various iron-doped vanadium oxide materials, the chemical compositions of which are not disclosed in the prior art.

According to another advantageous feature of the process of the invention, a pre-pulverisation is carried out for a sufficient period time in order to ensure a thorough cleaning of the target surface before the actual deposit. Such pre-pulverisation may, for example, be carried out for several minutes to a couple of hours, generally for about one hour. Deposit, as well as pre-pulverisation, is preferably carried out at ambient temperature, i.e. without heating the substrate.

The deposit of thin layered iron-doped vanadium oxide is realised by application of a power between both targets and the substrate, as previously described, generally during a period of time ranging from one to several hours, preferably from 1 to 12 hours, depending of the desired final thickness of the iron-doped vanadium oxide. As illustrative example only, deposit is carried out for 6 hours, when an iron-doped vanadium oxide having a thickness of about 500 nm is intended to be obtained.

The cathode co-pulverisation process according to the present invention has the advantage of making it possible to reach a broad range of compositions by using only two targets. It is indeed possible to easily control the content (i.e. the "y" value) of doping element (Fe) in the thin layers by only varying the ratio of the electrical powers applied to both the targets.

Still a further aspect of the present invention is a substrate coated with a thin layer of iron-doped vanadium (V) oxide of formula Fe_{y}V₂O₅ obtainable by the process according to the invention, wherein y is a positive real number in the range of 0.03 to 0.8, preferably in the range of 0.04 to 0.4, more preferably in the range 0.04 to 0.2. The thickness of the layer is in the range of about 50 nm to about 1000 nm, advantageously in the range of about 200 nm to about 800 nm, typically the thickness is about 500 nm.

As a comparison, using a conventional technique of cathode sputtering using a single target, would require the preparation of a great number of targets with various Fe_{y}V₂O₅ compositions. Moreover, the outputs of pulverization of the elements constituting the target being different, the content of iron within the thin layers (the composition of which being very often different from the composition of the initial target) would be very difficult to control.

Also the process of the present invention represents a valuable solution in terms of time saving, since the preparation of only one Fe-containing target and one V-containing target is necessary with the cathode co-pulverization technique, instead of preparing a great number of targets of different compositions, in the case of a conventional cathode sputtering technique.

It should also be noted that, no substantial difference in terms of deposit rate between the traditional technique of cathode sputtering and the co-pulverization technique could be assessed, for a given power applied to the V-target.

The inventors have surprisingly discovered that thin layers of V₂O₅ doped with iron of formula Fe_{y}V₂O₅, wherein y is as defined above, are effective to increase the electrochemical performances of positive electrodes, both in terms of capacity and behaviour in cycling.

A further aspect is therefore the use as positive electrode comprising at least one layer of iron-doped vanadium (V) oxide of formula FeyV₂O₅, wherein y is a positive real number in the range of 0.03 to 0.8, preferably in the range of 0.04 to 0.4, more preferably in the range 0.04 to 0.2, and the thickness of the layer is in the range of about 50 nm to about 1000 nm, advantageously in the range of about 200 nm to about 800 nm, typically the thickness is about 500 nm.

The positive electrode of iron-doped vanadium (V) oxide of formula Fe_{y}V₂O₅ of the present invention may be conventionally used in a great number of applications known in the art, and for example as positive electrode in batteries, especially microbatteries, as active electrode in electrochromic systems, as well as In catalysis and anti-static applications, and the like.

According to a preferred feature of the Invention, thin layers of iron-doped vanadium (V) oxide of formula Fe_{y}V₂O₅ are useful as positive electrodes in microbatteries. In such microbatteries, the electrolyte and the negative electrode are those commonly used in the art.

As non limiting examples, the electrolyte may be chosen from among lithium borates, lithium oxides, lithium sulphates, lithium phosphates, and the like and mixtures thereof, said electrolyte optionally further containing nitrogen, as is the case for example with Lison or Lipon, which is lithium sulphate or phosphate respectively, a portion of the oxygen atoms being replaced by nitrogen atoms.

As non limiting examples, the negative electrode may be chosen from among lithium, optionally together with one or more materials chosen from among carbon, silicon, germanium, tin and any other material able to form an alloy with lithium. Most preferably, the negative electrode is a lithium electrode.

When used as a positive electrode in microbatteries, the thin layer of iron-doped vanadium (V) oxide is, according to a preferred embodiment, of formula FeyV₂O₅, wherein y is 0.04 or wherein y is 0.19.

The following examples are provided for illustrative purpose only and do not intend to limit the present invention in any way.

### Examples

### Example 1: Preparation of thin lavers of Fe_{0.19}V₂O₅.

Thin layers of Fe_{0.19}V₂O₅ are prepared by cathode co-pulverization using a TSD 250-RF apparatus from H.E.F. Group and two ceramic, i.e. sintered targets: a V₂O₅ target and a Fe₂O₃ target having both 50 mm in diameter. The targets are prepared starting from a commercial powder (Aldrich 99.99%). Each powder (approximately 15 g) is mixed with 2 weight% of camphor, diluted in acetone. This mixture Is then squeezed under an air pressure of approximately 30,000 kg during 5 min. Each target is then sintered at 400°C during 12 h then at 600°C during 10 h. This heat treatment makes it pos sible to obtain a dense target with good mechanical resistance.

The targets are then fixed on the target-support with a silicone-containing adhesive. The two cathodes are positioned in a convergent manner and tilted to a fixed angle of 27.8° relative to the vertical direction, according to the intrinsic characteristics of the apparatus. The stainless steel substrates are placed in the pulverisation chamber on a mobile plate facing the targets, halfway of the two targets, at a distance of 8 cm away from the targets. The substrate support and the substrates are connected to earth.

In order to carry out the deposits, the pulverisation chamber is emptied using a turbomolecular pump until a limit vacuum of about 5.10⁻⁵ Pa is obtained. Then a gas mixture made up of 86 % of argon (purity: 99.995 %) and of 14 % of oxygen (purity: 99.5 %) is introduced into the chamber in order to obtain a total pressure in the chamber of 1 Pa.

Before deposit, a one hour pre-pulverisation is carried out in order to ensure a thorough cleaning of the target (extreme surface elimination) and so as to reach a constant pulverisation rate.

A power of 50 W is applied to the V₂O₅ target and a power of 20 W for the Fe₂O₃ target. The deposit is carried out at ambient temperature, i.e. without heating the substrate during 6 h in order to obtain a thickness of about 500 nm.

### Example 2: Preparation of thin layers of Fe_{0.04}V₂O₅

Thin layers of Fe_{0.04}V₂O₅ are prepared according to a similar process to that disclosed in example 1, except that a power of 12 W is applied to the Fe₂O₃ target.

### Example 3: Tests on the capability of lithium insertion

For this electrochemical study, thin layers are deposited on stainless steel discs of 13 mm in diameter. The discs were previously polished, cleaned and dried. The thin layers generally have a thickness of about 500 nm. Metallic lithium, in the form of a disc of 10 mm in diameter and having a thickness of 0.3 mm, Is used as the negative electrode. The electrolyte is a molar solution of a lithium salt in an organic solvent (for example LIPF₆ in a mixture of ethylene carbonate (EC) and dimethyl carbonate (DMC) 1:1. The electrochemical sequence is thus as follows: Li/ 1M LiPF₆ (EC/DMC) I Fe_{y}V₂O₅.

The two electrodes as well as the electrolyte are then put together in a glove box, under argon pressure, in a Teflon^{®} container. In order to prevent electrical short-circuits, the electrodes are separated from each other with three layers of a separator consisting of glass fiber paper impregnated with liquid electrolyte, The Teflon^{®} container is then paced into a glass container provided with electrical conductive pathways.

The above tests are run in liquid electrolyte and are run according to a similar procedure with all-solid-state microbatteries.

Electrochemical properties are assessed under golvanostatic conditions (an electrical tension is set and the electrical potential is monitored as a function of time) on a commercially available apparatus (Biologic VMP). Standard cycling is run between potential limits (3.7 V to 1.5 V/Li) with a current density of 15 µAcm⁻² (i.e. a current of 20 µA). Standard cycling therefore corresponds to the following steps:
- a 4 hours' initial relaxation;
- a discharge up to 1.5 V/Li;
- a 2 hours' relaxation;
- a charge up to 3.7 V/Li; and
- a 2 hours' relaxation.

### a) Comparison between microbatteries with a V₂O₅ positive electrode and with a Fe_{0.04}V₂O₅ positive electrode

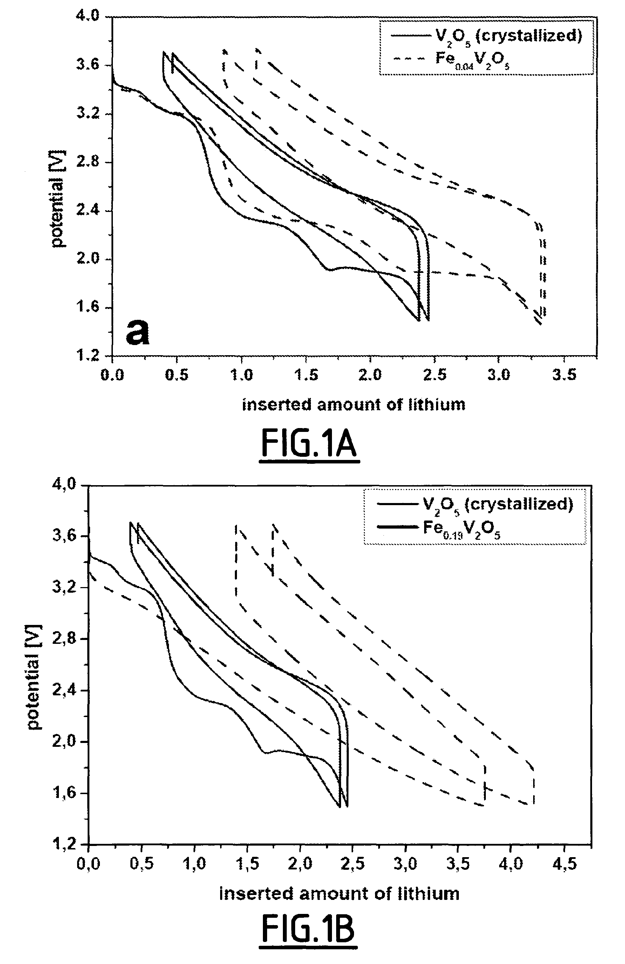

In the case of a low content of iron (y = 0.04), the curve of discharge presents 4 plateaus at potentials equivalent to those of the thin layer of crystallized pure V₂O₆ (see figure 1a). The plateaus are shifted towards the greater amounts of inserted lithium. The greater the amount of inserted lithium, the greater the shift of the plateau.

As shown on Figure 1a, the electrode with a thin layer of Fe_{0.04}V₂O₅ allows a greater amount of lithium to be inserted, as compared with the electrode with a thin layer of V₂O₅, this effect being obtained as from the first cycle. This greater amount of inserted lithium also leads to a better discharge capacity.

Moreover, the amount of reversible lithium is greater during the following cycles. This clearly indicates an improved behaviour in cycling as compared to using an electrode with a thin layer of V₂O₅.

### b) Comparison between microbatteries with a V₂O₅ positive electrode and with a Fo_{0.19}V₂O₅ positive electrode

With regard to the composition richer in iron (y = 0.19), the curve of first discharge does not present any more plateau but is characteristic of an amorphous material (see figure 1b). This was highlighted by X-ray diffraction analysis.

### Example 4: Microbatteries cycling tests

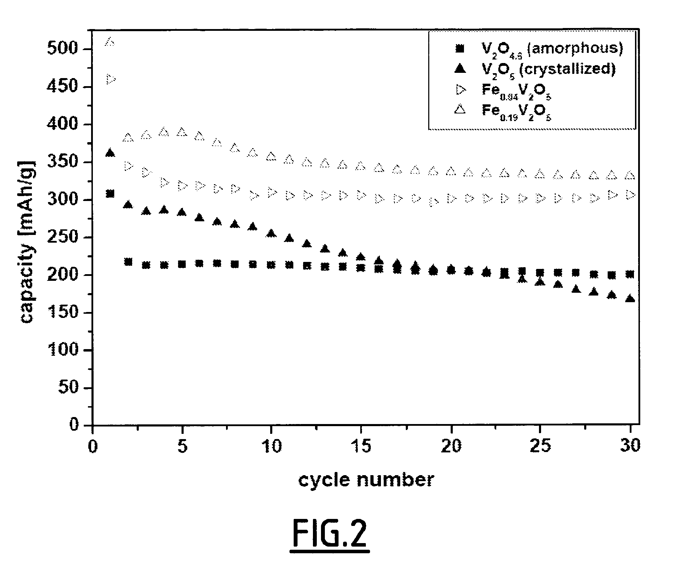

Figure 2 shows the discharge capacities obtained for different thin layers of pure or Iron doped V₂O₅, deposited in absence of oxygen or under a partial pressure of oxygen of 14 %.

From figure 2, it is clear that the initial capacity is definitely higher (22% with the first cycle) for an iron-doped vanadium(V) oxide, wherein y = 0.04, than that for pure vanadium(V) oxide.

Moreover, a much better behaviour in cycling is observed. Indeed, the capacity is stabilized at the end of only 7 or 8 cycles to reach a value close to 300 mAh/g whereas at the end of 20 cycles, the capacity is close to 200 mAh/g for pure vanadium(V) oxide (amorphous or crystallized).

With an iron-doped vanadium(V) oxide, wherein y = 0.19, the rate of intercalated lithium in the material is much higher, during the first discharge, than in the pure material, which results in an increase in the capacity of approximately 30 % as compared to crystallized V₂O₅ (see figure 2). For this material, we also observe an excellent behaviour in cycling. After 10 cycles, the capacity is stabilized around 340 mAh/g.

## Claims

1. A process for the preparation of a substrate coated with a thin layer of an Iron-doped vanadium(V) oxide comprising the steps of:
a) providing a first Vanadium-containing-target and a second Iron-containing-target and fixing each of said first and second targets on a targets-support;
b) positioning said first and second targets in a pulverisation chamber;
c) placing a substrate in the pulverisation chamber facing said two targets;
d) filling the pulverisation chamber with a gas mixture comprising from 0 to 60-70 % of oxygen, and from 30-40 to 100 % of argon, until a pressure of 0.5 Pa to 2 Pa is obtained in the pulverisation chamber;
e) applying an electrical power Pᵥ between the V-target and the substrate and an electrical power P_{Fe} between the Fe-target and the substrate; and hallowing deposition to occur;
f) removing the applied tension, opening the pulverization chamber and recovering the substrate having a thin layer of iron-doped vanadium(V) oxide on one of its surface.

2. The process of claim 1, wherein said first and second targets are positioned on a target-holder (cathode) In the pulverisation chamber.

3. The process of claims 1 or 2, wherein a pressure of the gas mixture of 1 Pa is obtained in the pulverisation chamber.

4. The process of anyone of claims 1 to 3, wherein both targets are positioned in the pulverisation chamber in a convergent manner.

5. The process of anyone of claims 1 to 4, wherein the substrate is placed on a mobile plate.

6. The process of anyone of claims 1 to 5, wherein the ratio P_{Fe} / Pᵥ ranges from 0.1 to 0.5, preferably from 0.2 to 0.4, and the applied power at the V-target (Pᵥ) is set to a value ranging from 30 W to 70 W, preferably 50 W, and the applied power at the Fe-target (P_{Fe}) is set to a value ranging from 5 W to 25 W, preferably from 10 W to 20 W.

7. The process of anyone of claims 1 to 6, wherein a pre-pulverisatlon is carried out before applying said electrical power between the V-target and the substrate and said electrical power between the Fe-target and the substrate.

8. The process of anyone of claims 1 to 7, said process being carried out at ambient temperature.

9. Substrate coated with a thin layer of an iron-doped vanadium(V) oxide wherein the this layer has a thickness in the range of 50mm to 1000 nm obtainable by the process according to anyone of claims 1 to 8.

10. Substrate according to claim 9, wherein the iron-doped vanadium(V) oxide has the following formula Fe_{y}V₂O₅, wherein y is a positive real number of from 0.03 to 0.8, preferably from 0.04 to 0.4, most preferably from 0.04 to 0.2.

11. Substrate according to claim 9 or 10, wherein the thin layer has a thickness in the range of 200 nm to 800 nm, preferably from 500 nm.

12. A microbattery comprising at least one substrate according to anyone of claims 9 to 12 as positive electrode.

13. The microbattery of claim 12, further comprising an electrolyte chosen from among lithium borate, lithium oxide, lithium sulphate, lithium phosphate, and the like and mixtures thereof and/or an electrolyte containing nitrogen.

14. The microbattery of claims 13, wherein the negative electrode is lithium, or lithium together with one or more materials chosen from among carbon, silicon, germanium, tin and any other material, able to form an alloy with lithium.

15. The microbattery of anyone of claims 12 to 14, wherein the iron-doped vanadium(V) oxide is of formula Fe_{y}V₂O₅, wherein y is 0.04 or wherein y is 0.19.

## Patentansprüche

1. Verfahren zur Herstellung eines Substrats, das mit einer dünnen Schicht eines eisendotieren Vanadium(V)-oxids beschichtet ist, umfassend die folgenden Schritte:
a) Bereitstellen eines ersten vanadiumhaltigen Ziels und eines zweiten eisenhaltigen Ziels sowie Fixieren jedes des ersten und zweiten Ziels auf einem Zielträger;
b) Positionieren des ersten und des zweiten Ziels in einer Pulverisierungskammer;
c) Platzieren eines Substrats in der Pulverisierungskammer, den beiden Zielen zugewandt;
d) Füllen der Pulverisierungskammer mit einem Gasgemisch, das 0 bis 60-70 % Sauerstoff und 30-40 bis 100 % Argon umfasst, bis ein Druck von 0,5 Pa bis 2 Pa in der Pulverisierungskammer erreicht ist;
e) Anlegen einer elektrischen Leistung Pᵥ zwischen dem V-Ziel und dem Substrat und einer elektrischen Leistung P_{Fe} zwischen dem Fe-Ziel und dem Substrat; und Zulassen, dass eine Ablagerung erfolgt;
f) Entfernen der angelegten Spannung, Öffnen der Pulverisierungskammer und Gewinnen des Substrats mit einer dünnen Schicht aus eisendotiertem Vanadium(V)-oxid auf einer Fläche davon.

2. Verfahren nach Anspruch 1, wobei das erste und das zweite Ziel auf einem Zielhalter (Kathode) in der Pulverisierungskammer positioniert werden.

3. Verfahren nach Anspruch 1 oder 2, wobei ein Druck des Gasgemischs von 1 Pa in der Pulverisierungskammer erhalten wird.

4. Verfahren nach einem der Ansprüche 1 bis 3, wobei beide Ziele in der Pulverisierungskammer zusammenlaufend positioniert werden.

5. Verfahren nach einem der Ansprüche 1 bis 4, wobei das Substrat auf einer beweglichen Platte platziert wird.

6. Verfahren nach einem der Ansprüche 1 bis 5, wobei das Verhältnis P_{Fe}/Pᵥ im Bereich von 0,1 bis 0,5, vorzugsweise von 0,2 bis 0,4, liegt, und wobei die am V-Ziel (Pᵥ) angelegte Leistung auf einen Wert im Bereich von 30 W bis 70 W, vorzugsweise 50 Watt, festgelegt ist, und wobei die am Fe-Ziel (P_{Fe}) angelegte Leistung auf einen Wert im Bereich von 5 W bis 25 W, vorzugsweise von 10 W bis 20 W, festgelegt ist.

7. Verfahren nach einem der Ansprüche 1 bis 6, wobei eine Vorpulverisierung durchgeführt wird, bevor die elektrische Leistung zwischen dem V-Ziel und dem Substrat und die elektrische Leistung zwischen dem Fe-Ziel und dem Substrat angelegt werden.

8. Verfahren nach einem der Ansprüche 1 bis 7, wobei das Verfahren bei Umgebungstemperatur durchgeführt wird.

9. Substrat, das mit einer dünnen Schicht aus einem eisendotierten Vanadium(V)-oxid beschichtet ist, wobei die dünne Schicht eine Dicke im Bereich von 50 nm bis 1000 nm aufweist, das mit dem Verfahren nach einem der Ansprüche 1 bis 8 erhältlich ist.

10. Substrat nach Anspruch 9, wobei das eisendotierte Vanadium(V)-oxid die Formel FeyV₂O₅ aufweist, wobei y eine positive reele Zahl von 0,03 bis 0,8, vorzugsweise von 0,04 bis 0,4, am meisten bevorzugt von 0,04 bis 0,2, ist.

11. Substrat nach Anspruch 9 oder 10, wobei die dünne Schicht eine Dicke im Bereich von 200 nm bis 800 nm, vorzugsweise von 500 nm, aufweist.

12. Mikrobatterie, umfassend zumindest ein Substrat nach einem der Ansprüche 9 bis 12 als positive Elektrode.

13. Mikrobatterie nach Anspruch 12, ferner umfassend einen Elektrolyten, ausgewählt aus Lithiumborat, Lithiumoxid, Lithiumsulphat, Lithiumphosphat und dergleichen und Mischungen davon, und/oder einen elektrolythaltigen Stickstoff.

14. Mikrobatterie nach Anspruch 13, wobei die negative Elektrode Lithium oder Lithium gemeinsam mit einem oder mehreren Materialien ist, ausgewählt aus Kohlenstoff, Silicium, Germanium, Zinn und einem anderen Material, das in der Lage ist, eine Legierung mit Lithium zu bilden.

15. Mikrobatterie nach einem der Ansprüche 12 bis 14, wobei das eisendotierte Vanadium(V)-oxid die Formel FeyV₂O₅ aufweist, wobei y 0,04 ist oder wobei y 0,19 ist.

## Revendications

1. Procédé pour la préparation d'un substrat revêtu d'une couche mince d'un oxyde de vanadium(V) dopé au fer, comprenant les étapes consistant à :
a) disposer d'une première cible contenant du vanadium et d'une deuxième cible contenant du fer, et fixer chacune desdites première et deuxième cibles sur un support de cible ;
b) positionner lesdites première et deuxième cibles dans une chambre de pulvérisation ;
c) placer un substrat dans la chambre de pulvérisation en face desdites deux cibles ;
d) remplir la chambre de pulvérisation avec un mélange gazeux comprenant de 0 à 60-70 % d'oxygène et de 30-40 à 100 % d'argon jusqu'à ce qu'une pression de 0,5 Pa à 2 Pa soit obtenue dans la chambre de pulvérisation ;
e) appliquer une puissance électrique Pᵥ entre la cible en V et le substrat et une puissance électrique P_{Fe} entre la cible en Fe et le substrat ; et laisser la déposition se produire ;
f) retirer la tension appliquée, ouvrir la chambre de pulvérisation et recouvrir le substrat ayant une mince couche d'oxyde de vanadium(V) dopé au fer sur l'une de ses surfaces.

2. Procédé selon la revendication 1, dans lequel lesdites première et deuxième cibles sont positionnées sur un support de cible (cathode) dans la chambre de pulvérisation.

3. Procédé selon la revendication 1 ou 2, dans lequel une pression du mélange gazeux de 1 Pa est obtenue dans la chambre de pulvérisation.

4. Procédé selon l'une quelconque des revendications 1 à 3, dans lequel les deux cibles sont positionnées dans la chambre de pulvérisation d'une manière convergente.

5. Procédé selon l'une quelconque des revendications 1 à 4, dans lequel le substrat est placé sur une plaque mobile.

6. Procédé selon l'une quelconque des revendications 1 à 5, dans lequel le rapport P_{Fe}/P_{V} est situé dans la plage allant de 0,1 à 0,5, de préférence de 0,2 à 0,4, et la puissance appliquée à la cible en V (Pᵥ) est établie à une valeur située dans la plage allant de 30 W à 70 W, de préférence 50 W, et la puissance appliquée à la cible en Fe (P_{Fe}) est établie à une valeur située dans la plage allant de 5 W à 25 W, de préférence de 10 W à 20 W.

7. Procédé selon l'une quelconque des revendications 1 à 6, dans lequel une pré-pulvérisation est effectuée avant application de ladite puissance électrique entre la cible en V et le substrat et de ladite puissance électrique entre la cible en Fe et le substrat.

8. Procédé selon l'une quelconque des revendications 1 à 7, lequel procédé est effectué à la température ambiante.

9. Substrat revêtu d'une couche mince d'un oxyde de vanadium(V) dopé au fer, dans lequel la couche mince a une épaisseur située dans la plage allant de 50 nm à 1000 nm, pouvant être obtenu par le procédé selon l'une quelconque des revendications 1 à 8.

10. Substrat selon la revendication 9, dans lequel l'oxyde de vanadium(V) dopé au fer a la formule suivante : Fe_{y}V₂O₅, dans laquelle y est un nombre réel positif de 0,03 à 0,8, de préférence de 0,04 à 0,4, tout spécialement de 0,04 à 0,2.

11. Substrat selon la revendication 9 ou 10, dans lequel la couche mince a une épaisseur située dans la plage allant de 200 nm à 800 nm, de préférence de 500 nm.

12. Microbatterie comprenant au moins un substrat selon l'une quelconque des revendications 9 à 12 en tant qu'électrode positive.

13. Microbatterie selon la revendication 12, comprenant en outre un électrolyte choisi parmi le borate de lithium, l'oxyde de lithium, le sulfate de lithium, le phosphate de lithium, et analogues, et leurs mélanges, et/ou un électrolyte contenant de l'azote.

14. Microbatterie selon la revendication 13, dans laquelle l'électrode négative est en lithium, ou en lithium conjointement avec un ou plusieurs matériaux choisis parmi le carbone, le silicium, le germanium, l'étain et n'importe quel autre matériau capable de former un alliage avec le lithium.

15. Microbatterie selon l'une quelconque des revendications 12 à 14, dans laquelle l'oxyde de vanadium(V) dopé au fer est de formule Fe_{y}V₂O₅ dans laquelle y vaut 0,04 ou dans laquelle y vaut 0,19.
